# EUROPEAN PATENT APPLICATION

(11) **EP 0 847 962 A1**
(43) Date of publication of application: **17.06.1998**
(21) Application number: 97830664.5
(22) Date of filing: 12.12.1997
(51) Int. Cl.: C02F 1/48

(54) **Magnetic lime-scale conditioner**

(30) Priority: 13.12.1996 IT BS960096 U
(71) Applicant: Idro-Tec S.r.l., 25124 Brescia (IT)
(72) Inventor: Magri, Bruno, 25080 Moniga, (Brescia) (IT); Scalvini, Francesco, 25039 Travagliato, (Brescia) (IT)
(74) Representative: Manzoni, Alessandro

(57) **Abstract**

This is a magnetic conditioner applicable to a water pipe with the function of an ionic accelerator to inhibit the formation of lime-scale deposits and encrustation. It is comprised of two complementary units (11, 12) each containing at least one permanent magnet (11b, 112b), hinged together on one side closeable around a water pipe by rotation around the hinge axis. The permanent magnets have equal opposing polarity, north-north or south-south, indifferently.

## Description

This invention is a magnetic conditioner with the function of an ionic accelerator. It is used to treat water from the mains, by inhibiting the formation of lime-scale deposits and encrustation in pipes, tanks and appliances using or circulating water.

Magnetic devices have already been proposed that when placed along water pipes act as an ionic accelerator thus impeding the deposit of lime-scale substances transported by the water. In fact, magnetic conditioners to inhibit the formation of lime-scale encrustation in hydraulic systems and appliances are known: these include at least two permanent magnets, in the form of a plate with opposing polarity, spaced in parallel to delimit the transit of the water to be treated between them. The magnetic field lines are prevalently directed transversely to the direction of the water.

In these well known conditions, the magnetic elements are located and held in an external manifold that is inserted into the water pipe concerned. This application is rather complex due to the fact that the conditioner is coupled in-line to a water pipe and that the magnetic elements must define a passage for the water, directly or through a small pipe.

A different type of conditioner has two complementary units, each containing a permanent magnet that are positioned around a water pipe, opposite each other, held in position by bands or similar fastenings.

The purpose of this finding is that of supplying an innovative magnetic conditioner for the use mentioned above. It is achieved using a new arrangement and combination of elements to make it more convenient, easy and also more efficient.

This aim is reached with a magnetic conditioner made up of two units, each containing at least one permanent magnet, hinged together on one side and closeable on the other by rotation, like a clamp around a water pipe.

The permanent magnets in the two units having equal opposing polarity are favourably placed contiguous to the water pipe so as to create magnetic field lines prevalently in the direction of the water flow in the pipe.

Thanks to the equal opposing polarity, the conditioner proposed here can remain attached to the water pipe even without additional means of fixing.

The extra features of the finding will become more evident from the following description with reference to the enclosed indicative and not limiting drawings, in which:
Fig. 1 is a view of the conditioner while being fitted to a water pipe;
Fig. 2 shows a transverse section of the conditioner fitted to a pipe;
and Fig. 3 shows one of its transverse sections.

As mentioned above, the magnetic conditioner in question is comprised of two units, 11, 12 connected together by a hinge 13 on one side.

Each of the two units 11 and 12 have an external body or housing 11 a, 12a respectively made of steel, iron, brass or plastic.

Permanent magnets, preferably made of neodymium, 11b, 12b are located in the bodies or housings, held in by appropriate, nonmagnetic filling material 11 c, 12c.

The two equal permanent magnets, 11b, 12b in the two units have opposing polarity 11' 12' and remain close to pipe 14 to which the conditioner will be applied. The opposing polarity of the magnets can be north-north or south-south indifferently.

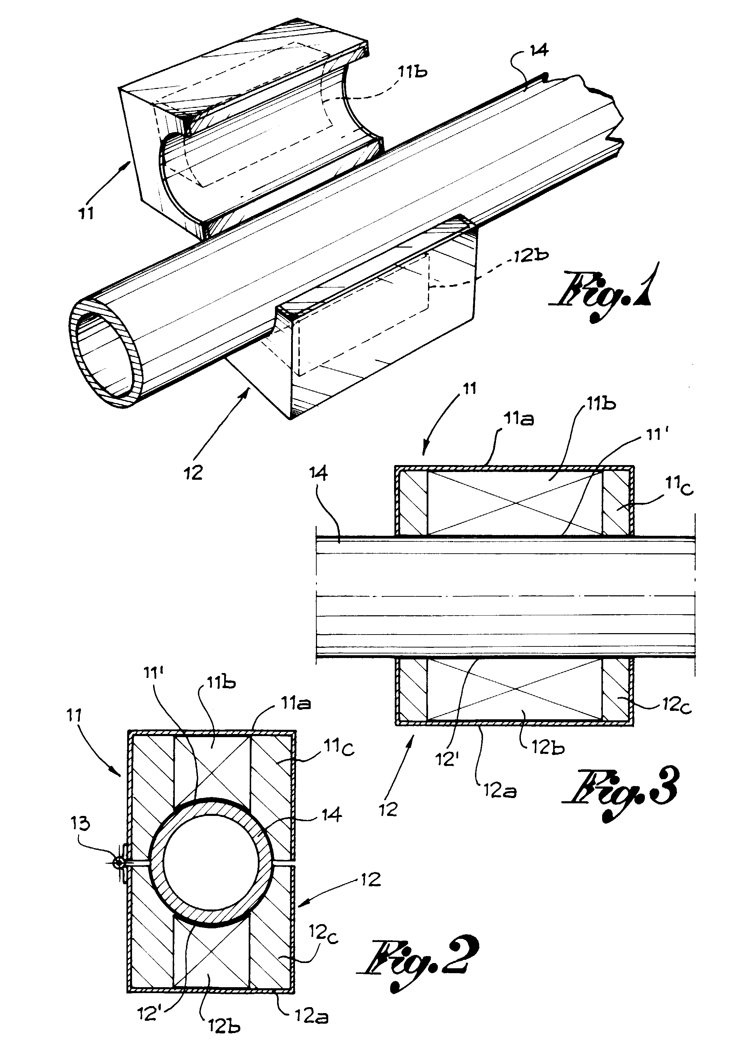

To fit the conditioner to a pipe 14, the two units 11, 12 are firstly rotated around the hinge to open them as in Fig. 1. and are then closed around the pipe as shown in Fig. 2 even without the need for fasteners, if the pipe is made of ferrous material.

## Claims

1. A magnetic conditioner, applicable to a water pipe with the function of an ionic accelerator, to inhibit the formation of lime-scale deposits and encrustation, in pipes, tanks and water appliances or water circulation appliances, characterised by the fact of being comprised of two complementary units (11, 12) each containing at least one permanent magnet (11b, 12b), hinged (13) together that can be closed around a water pipe through rotation around the hinge axis (13).

2. A magnetic conditioner according to claim 1, in which each unit includes an external body or housing and at least one permanent magnet made of neodymium, located and held in the body.

3. A magnetic conditioner according to claim 1, in which the permanent magnets in the two complementary, hinged units have equal opposing polarity, north-north or south-south indifferently.

4. A magnetic anti-lime-scale conditioner characterised by the fact of including two complementary units (11, 12) each containing at least one permanent magnetic element (11b, 12b), hinged on one side to bring them close (closure) and to separate them (opening) by rotation and by the fact that the said permanent magnets are positioned with opposing equal polarity: as the conditioner is closed around a water pipe and the permanent magnetic field lines are prevalently in the direction of the water flow in the said pipe.
